# EUROPÄISCHE PATENTSCHRIFT

(11) **EP 1 362 647 B1**
(45) Veröffentlichungstag und Bekanntmachung des Hinweises auf die Patenterteilung: **09.05.2007**
(21) Anmeldenummer: 03009995.6
(22) Anmeldetag: 02.05.2003
(51) Int. Cl.: B09B 3/00

(54) **Verfahren zur Behandlung von Abfallstoffen sowie Vorrichtung zur Durchführung des Verfahrens**
Method and device for treating waste material
Procédé et dispositif pour le traitement de déchets

(30) Priorität: 15.05.2002 DE 10221868; 30.08.2002 DE 10240812
(43) Veröffentlichungstag der Anmeldung: 19.11.2003
(73) Patentinhaber: Fritsch, Edwin, 35619 Braunfels (DE)
(72) Erfinder: Fritsch, Edwin, 35619 Braunfels (DE)
(74) Vertreter: Knefel, Cordula

(56) Entgegenhaltungen:
- EP-A- 0 526 697
- DE-A- 19 520 393
- DE-C- 602 996
- DE-C- 4 244 099
- US-A- 3 198 655
- US-A- 3 654 048

## Beschreibung

Die Erfindung betrifft ein Verfahren zur Behandlung von Mehl aus besonders überwachungsbedürftigen Abfallstoffen oder zur Behandlung von zerkleinerten Abfallstoffen wie Glaswolle, Mineralwolle und sonstigen anorganischen Stoffen sowie eine Vorrichtung zur Durchführung des Verfahrens.

Gemäß dem Stand der Technik sind Mineralwolle, Glaswolle und sonstige anorganische Stoffe bezüglich der Abfallentsorgung besonders überwachungsbedürftig. Diese Stoffe werden als BÜ-Stoffe bezeichnet gemäß der Verordnung über das europäische Abfallverzeichnis (Abfallverzeichnis-Verordnung (AVV)).

Besonders überwachungsbedürftige Abfallstoffe haben gemäß der Abfallverzeichnis-Verordnung (AVV) die Nummer 170603*.

Gemäß dem Stand der Technik wurden vor Inkrafttreten der Abfallverzeichnis-Verordnung derartige Stoffe folgendermaßen aufbereitet:
1. In einem Sieb mit Öffnungen, die circa 50 Millimeter Durchmesser aufweisen, erfolgt eine Vorzerkleinerung. In die Vorzerkleinerung wird das gesamte Material mit Folie, Holz, Verunreinigungen und so weiter gegeben.
2. Dieses vorzerkleinerte Material wird mittels eines Förderbandes in eine Stangenmühle befördert. In der Stangenmühle sind hochlegierte Stahlstangen angeordnet, beispielsweise mit einem Durchmesser von 20 bis 80 Millimetern. Die Stahlstangen sind als hochlegierte Stahlstangen ausgebildet, damit sie großen Belastungen Stand halten und sich nicht verbiegen. Die Stangen sind in einer Trommel der Stangenmühle frei beweglich angeordnet. Beim Drehen der Trommel fallen die Stangen herunter. Zusätzlich sind kleine Vorsprünge vorgesehen, so dass die Stangen noch zusätzliche Bewegungen ausführen.
   In diese Stangenmühle wird das vorzerkleinerte Material eingebracht und zu einem Mehl verarbeitet.
3. Über ein Magnetband erfolgt eine Metallabscheidung.
4. Mittels eines Siebes werden Folien, Holz und dergleichen ausgesiebt.
5. Das mit diesem Verfahren erhaltene Mehl wird gemäß dem Stand der Technik einer weiteren Verwertung, zum Beispiel einer Ziegelfabrik zugeführt. Das Mehl wird in der Ziegelfabrik dem Rohmaterial für die Ziegel zugesetzt, und die Ziegel werden gebrannt. Damit ist das Mehl entsorgt.

Da es sich bei dem Mehl um einen besonders überwachungsbedürftigen Stoff handelt, ist diese Art der Entsorgung nach der neuen Abfallverzeichnis-Verordnung (AVV) nicht mehr erlaubt.

Zum Stand der Technik (EP 0 526 697 A2) gehören ein Verfahren und eine Anlage zum Behandeln von Mineralwolle-Abfällen. Bei diesem zum Stand der Technik gehörenden Verfahren wird einem Mehl aus Mineralwolle-Abfällen ein festes Bindemittel oder eine Flüssigkeit zugeführt. Anschließend werden Mineralwolle-Granalien geformt und getrocknet, so dass diese dem Herstellungsprozess für Mineralwolle, insbesondere dem Schmelzprozess wieder zugeführt werden können. Dadurch, dass diese Abfälle unmittelbar wieder dem Herstellungsprozess zugeführt werden, handelt es sich lediglich um einen überwachungsbedürftigen und nicht um einen besonders überwachungsbedürftigen Stoff.

Dieses zum Stand der Technik gehörende Verfahren hat jedoch auch den Nachteil, dass trockene Mineralwolle-Granalien hergestellt werden. Diese trockenen Mineralwolle-Granalien sind nicht transportfähig, da sie für mechanische Zerstörung sehr leicht anfällig sind und damit eine Umwelt- und Gesundheitsgefährdung darstellen.

Weiterhin gehört zum Stand der Technik (DE 42 44 099 C1) ein Verfahren zur Abscheidung von kleinsten mineralischen Fasern beziehungsweise Staubpartikeln. Gemäß diesem Verfahren wird ein Gemisch aus Wasser und im Wasser quellbarem Stoff in direkter Nähe einer Sanierungsstelle versprüht, und der toxische Feinstaub wird mit dem Gemisch aus Wasser und quellbarem Stoff aufgenommen. Auch dieses zum Stand der Technik gehörende Verfahren hat den Nachteil, dass kein weiterverwertbares Endprodukt entsteht, welches zu den nicht besonders überwachungsbedürftigen Abfallstoffen.zählt. Insbesondere wird auch gemäß diesem zum Stand der Technik gehörenden Verfahren ein verfestigtes, das heißt trockenes Endprodukt hergestellt, welches ebenfalls sehr anfällig gegenüber mechanischer Zerstörung ist und damit eine Gesundheits- und Umweltbelastung darstellt, da bei mechanischer Zerstörung die gefährlichen Partikel ohne Weiteres wieder austreten können.

Das der Erfindung zugrunde liegende technische Problem besteht darin, ein Verfahren anzugeben, mit dem Mehl aus besonders überwachungsbedürftigen Abfallstoffen oder zerkleinerten besonders überwachungsbedürftigen Abfallstoffen zu nicht besonders überwachungsbedürftigen Abfallstoffen verarbeitet werden kann. Darüber hinaus soll eine Vorrichtung zur Durchführung des Verfahrens angegeben werden.

Dieses technische Problem wird durch ein Verfahren gemäß Anspruch 1 sowie durch eine Vorrichtung mit den Merkmalen gemäß Anspruch 14 gelöst.

Bei den hier besprochenen Abfallstoffen handelt es sich in erster Linie um anorganische Abfallstoffe.

Dadurch, dass gemäß der Erfindung dem Mehl aus besonders überwachungsbedürftigen Abfallstoffen oder den zerkleinerten besonders überwachungsbedürftigen Abfallstoffen folgende Materialien: ein oder mehrere Bindemittel und ein oder mehrere Quellmittel zugesetzt werden, und dadurch, dass das Mehl oder die zerkleinerten Abfallstoffe mit diesen Materialien vermischt werden, wird ein feuchtes Endprodukt hergestellt und das Mehl oder die zerkleinerten Abfallstoffe werden derart gebunden, dass das Mehl transportfähig wird und weiterverarbeitet werden kann, ohne dass gefährliche Partikel austreten.

Die folgenden Ausführungen beziehen sich auf das Mehl der Abfallstoffe oder auf die zerkleinerten Abfallstoffe. Der Einfachheit halber wird jedoch nur noch von Abfallstoffen die Rede sein.

Gemäß einer besonders bevorzugten Ausführungsform wird den Abfallstoffen als Quellmittel Gelatine zugesetzt. Dies hat den Vorteil, dass sich die Gelatine um die Abfallstoffe legt und anschließend aufquillt, so dass ein erster Schutzmantel entsteht.

Als Gelatine kann technische Gelatine oder Lebensmittelgelatine verwendet werden. Lebensmittelgelatine hat den Vorteil, dass diese eine geringere Viskosität aufweist und damit leichter verarbeitet werden kann. Technische Gelatine hat den Vorteil, dass sie deutlich kostengünstiger ist.

Es ist gemäß einer weiteren Ausführungsform möglich, den Abfallstoffen Klebstoffe, beispielsweise Knochenleim oder Hautleim zuzusetzen. Mittels der Klebstoffe ist es möglich, die Abfallstoffe genau so zu binden wie mit der technischen Gelatine. Die Klebstoffe sind jedoch teurer als die Gelatine.

Es ist auch möglich, andere Bindemittel zuzusetzen, beispielsweise Bindemittel auf der Basis von Naturstoffen wie Kasein oder Stärke, wobei hier ein Zusatz von Wasser erforderlich ist.

Gemäß einer weiteren Ausführungsform wird den Abfallstoffen als Bindemittel Ton oder Tonmehl zugesetzt. Ton oder Tonmehl ist wiederum sehr kostengünstig.

Gemäß einer besonders bevorzugten Ausführungsform wird den Abfallstoffen in einem ersten Verfahrensschritt wenigstens ein Quellmittel und in einem zweiten Verfahrensschritt wenigstens ein Bindemittel zugesetzt.

Gemäß einer besonders bevorzugten Ausführungsform wird in einem ersten Verfahrensschritt Gelatine den Abfallstoffen zugesetzt. Die Abfallstoffe werden mit der Gelatine vermischt. Während des Mischvorganges oder nach dem Mischvorgang wird diesem Gemisch Ton oder Tonmehl zugegeben, oder es erfolgt eine weitere Vermischung. Man erhält Pellets, die eine gummiartige Konsistenz aufweisen, und in denen die Abfallstoffe gebunden sind. Die Abfallstoffe können nicht mehr aus den Pellets austreten, und durch das Gelatine/Ton-Gemisch weisen die Pellets einen ersten Schutzmantel aus Gelatine auf, der sich um die Abfallstoffe gelegt hat, und einen zweiten Schutzmantel aus Ton oder Tonmehl. Dadurch, dass die Gelatine Feuchtigkeit bindet, bleibt auch der Ton feucht, so dass die Pellets über einen langen Zeitraum, das heißt über mehrere Wochen und sogar Monate die gummiartige Konsistenz behalten und damit besonders gut transportfähig sind.

Die Verarbeitung der Abfallstoffe erfolgt folgendermaßen:

Die Abfallstoffe (Mehl oder zerkleinerte Abfallstoffe) werden in ein Fallrohr eingebracht, beispielsweise mit einem Durchmesser von 200 Millimetern. In dem Fallrohr sind Düsenringe, vorteilhaft drei Düsenringe angeordnet. Diese Düsenringe weisen sehr feine Sprühdüsen auf, so dass die durch das Fallrohr durchfallenden Abfallstoffe mit Gelatine benetzt werden.

Vorteilhaft wird in dem Fallrohr den Abfallstoffen Wasser und Gelatine zugesetzt. Gemäß einer besonders bevorzugten Ausführungsform sind ein Düsenring für die Gelatine und zwei Düsenringe für das Wasser vorgesehen.

In dem Fallrohr bewegt sich das Material der Abfallstoffe aufgrund der Schwerkraft nach unten. Da das Material faserig ist, fällt es nicht gerade herunter, sondern verdreht sich. Die Düsen in dem Fallrohr sind vorteilhaft derart ausgerichtet, dass der Düsenstrahl in die Mitte des Fallrohres gerichtet ist. Die Flüssigkeit wird jedoch so fein zerstäubt, dass die Flüssigkeit nebelartig in dem Fallrohr verteilt ist.

Die mit Flüssigkeit benetzten Abfallstoffe werden nach dem Fallrohr einem Mischer, beispielsweise einem Zweiwellenmischer oder einem Pflugscharmischer zugeführt.

Nach dem Mischer werden die Abfallstoffe einer mechanischen Behandlung, vorteilhaft einem Pressvorgang oder einer Trommelpelletierung unterzogen.

Als Presse wird vorzugsweise eine Schneckenpresse verwendet. Es ist jedoch auch möglich, andere Pressen, beispielsweise eine Pumpenpresse zu verwenden.

In der Presse wird das Material beispielsweise hydraulisch zusammengedrückt. Beim Zusammendrücken wird die Flüssigkeit noch einmal gut in den gesamten Abfallstoffen verteilt. Ein Teil des Wassers wird in der Presse sogar schon wieder herausgepresst. Beim Zusammenpressen entsteht auch ein Anteil Eigenwärme, der für den Vorgang ebenfalls vorteilhaft ist.

Ein weiterer vorteilhafter Aufbau einer erfindungsgemäßen Vorrichtung sieht einen Mischer, beispielsweise einen Pflugscharmischer oder Zweiwellenmischer für die Vermischung des Materials nach dem Benetzen mit Flüssigkeit vor. Anschließend wird das vermischte Material in einer Presse, beispielsweise einer Pelletierpresse gepresst. Das aus der Pelletierpresse kommende Material, das vorteilhaft die Form von Pellets aufweist, wird einem Trommelmischer zugeführt. Die Pellets erhalten in dem Trommelmischer eine runde oder annähernd runde Form. Wesentlich ist, dass die Pellets oder Kugeln aus den Abfallstoffen keine Abbruchkanten aufweisen.

Das gepresste Material wird nach der Presse durch ein Lochsieb freigegeben, so dass vorzugsweise Pellets aus der Presse herausfallen.

Besonders vorteilhaft ist das Verfahren der Trommelpelletierung. Bei der Trommelpelletierung wird das Gemisch aus Bindemitteln und Quellmitteln in einer Trommel, an deren Innenwand Mitnehmer angeordnet sind, mit der Trommel gedreht. Hierbei bilden sich Pellets aus.

Die Pellets, die man erhält, können der Ziegelfabrik oder dem Weiterverarbeiter zugeführt werden.

Wichtig ist, dass den Abfallstoffen ein Bindemittel und ein Quellmittel zugesetzt wird.

Für die Benetzung der Abfallstoffe können zusätzlich folgende Materialien verwendet werden:
1. Wasser,
2. Knochenleim,
3. Hautleim,
4. Melasse.

Als besonders vorteilhaft haben sich Hautleim 180 und Hautleim 240, wie auch technische Gelatine 333 oder technische Gelatine 450 herausgestellt. Die Zahlen bei den Materialien bedeuten die Blumigkeit, welche ein Faktor dafür ist, ob sich das Material an die Abfallstoffe lediglich anlegen oder diese umschließen kann.

Bei der Verwendung der Gelatine tritt der besondere Vorteil auf, dass die Gelatine quillt. Hierdurch verstärkt sich der Schutzmantel um die Abfallstoffe.

Es können alle genannten Komponenten einzeln oder auch in Kombination zusätzlich zugesetzt werden.

Der Ton bewirkt ein sehr hohes Verwertungsgewicht.

Das Mineralmehl kann aus vielen verschiedenen Abfallstoffen stammen, nämlich aus Mineralfasern, Feuerfestmaterial (Schamotte-Steine), Glas, PU-Schaum, Deckenplatten (beispielsweise glasfasergepresst).

Vorteilhaft werden zu den Abfallstoffen, bezogen auf das Gewicht der Abfallstoffe, 1 bis 25 Gewichtsprozent Quellmittel und 5 bis 60 Gewichtsprozent Ton zugegeben.

Als besonders vorteilhaft hat sich die Zugabe von 4 bis 20 Gewichtsprozent Quellmittel und 6 bis 50 Gewichtsprozent Bindemittel, bezogen auf das Gewicht der Abfallstoffe, herausgestellt.

Besonders gute Ergebnisse wurden erzielt, wenn als Quellmittel Gelatine und als Bindemittel Ton zugegeben wurde.

Im Folgenden wird ein Ausführungsbeispiel angegeben.

### Beispiel:

| | |
|---|---|
| 500 | Gramm Glasmehl |
| 80 | Gramm Gelatine (Lebensmittelgelatine) |
| 150 | Gramm Ton. |

Das Glasmehl wird durch das Fallrohr mit Wasser und Gelatine benetzt. Mit dem ersten Düsenring wird dem Mehl Wasser zugesetzt, mit dem zweiten Düsenring Gelatine und mit dem dritten Düsenring wiederum Wasser. Insgesamt erfolgt eine Wasserzugabe von 80 Gramm. Nach Mischen des Glasmehl-/Gelatine-/Wassergemisches in einem Zweiwellenmischer wird dem Gemisch der Ton zugesetzt. Es erfolgt eine weitere Mischung in dem Zweiwellenmischer.

Dieses Gemisch wird einem Trommelmischer zugeführt, aus dem man die Pellets erhält.

Die Pellets haben eine gummiartige Konsistenz und behalten diese für mindestens elf Wochen. Im Mikroskop betrachtet ist die Oberfläche der Pellets sehr glatt. Es treten keine Abfallstoffe, beispielsweise Fasern aus der Oberfläche der Pellets aus.

Mit diesem Verfahren ist es möglich, besonders überwachungsbedürftige Abfallstoffe, die gemäß der Abfallsverwertungsvorschrift die Nummer ASS 170603 haben, in ein Material, das nicht besonders überwachungsbedürftig ist, mit der Nummer ASS 170604 umzuwandeln. ASS bezeichnet hier die Abfallschlüsselnummer. Das Endprodukt kann eine pellet- oder kugelförmige Form aufweisen. Wesentlich ist, dass keine Abbruchkanten vorhanden sind.

In der Zeichnung ist ein Ausführungsbeispiel der Erfindung dargestellt, und zwar zeigen:
- Fig. 1: ein Schema einer erfindungsgemäßen Vorrichtung;
- Fig. 2: ein geändertes Ausführungsbeispiel.

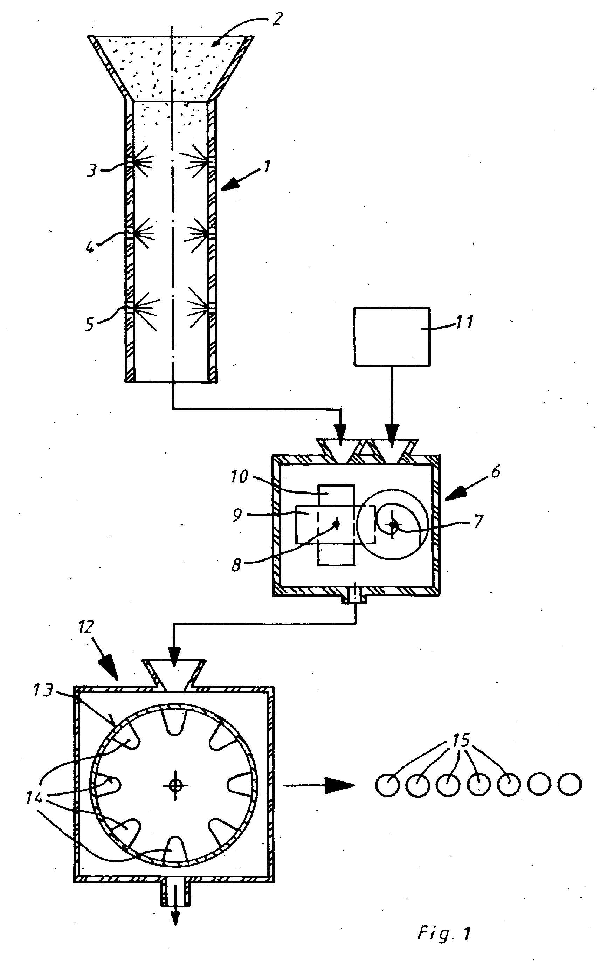

Die Fig. 1 zeigt ein Fallrohr (1), dem Abfallstoffe in Form von Mehl zugeführt werden. In dem Fallrohr (1) sind drei Düsenringe (3, 4, 5) angeordnet. Über die Düsenringe (3 und 5) wird das Mehl (2) mit Wasser bestäubt. Über den Düsenring (4) wird Gelatine zugeführt. Die Düsenringe (3, 4, 5) erzeugen einen feinen Nebel in dem Fallrohr (1).

Nach dem Fallrohr wird das Mehl-/Gelatine-/Wassergemisch einem Zweiwellenmischer (6) zugeführt. In dem Zweiwellenmischer (6) sind eine Schnecke (7) und eine Welle (8) mit zwei quaderförmigen Mischarmen (9, 10) angeordnet. In dem Zweiwellenmischer (6) wird das Mehl mit der Gelatine und dem Wasser vermischt. Nach einer gewissen Mischzeit wird darüber hinaus Tonmehl (11) zugeführt, welches ebenfalls mit dem vorhandenen Gemisch vermischt wird.

Nach einer ausreichenden Mischzeit wird das gesamte Gemisch einem Trommelmischer (12) zugeführt. In dem Trommelmischer (12) ist eine Trommel (13) drehbar angeordnet, welche an ihrer Innenwand Mitnehmer (14) aufweist. Durch die Rotationsbewegung in dem Trommelmischer (12) werden aus dem Gemisch Pellets (15) ausgeformt. Die Pellets (15) weisen eine gummiartige Konsistenz auf. Sie haben eine glatte Oberfläche, aus der keine Abfallstoffe austreten oder hervorragen.

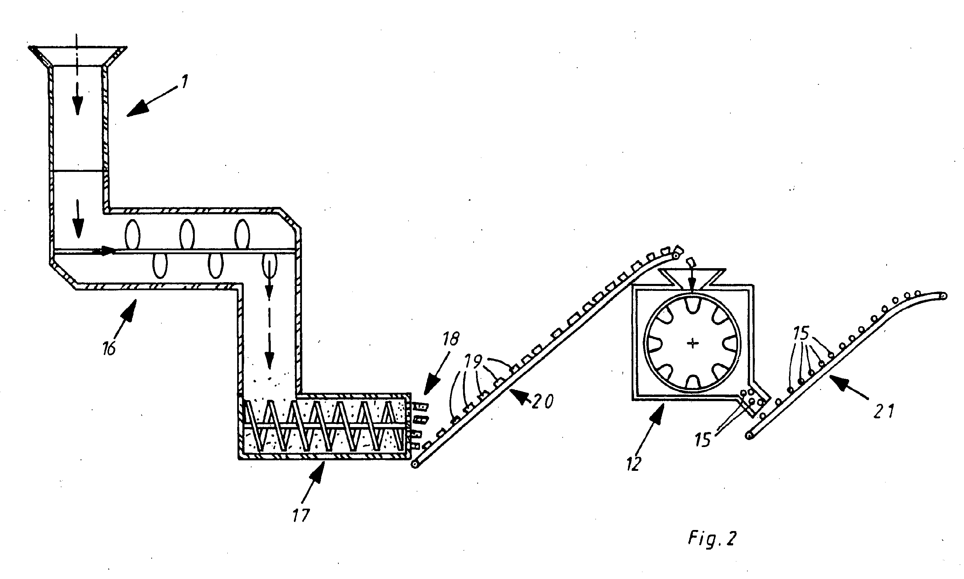

Gemäß Fig. 2 wird das Material, welches aus dem Fallrohr (1) mit Wasser vermischt worden ist, einem Pflugscharmischer (16) zugeführt. In Fig. 2 ist das Fallrohr lediglich noch schematisch dargestellt. Die Benetzung erfolgt jedoch wie in Fig. 1 dargestellt.

Das in dem Pflugscharmischer (16) mit Ton vermischte Material wird einer Pelletierpresse (17) zugeführt. Aus der Pelletierpresse kommt ein strangförmiges Material (18) heraus, welches durch das Eigengewicht abfällt. Die Pellets (19) werden dem Trommelmischer (12) zugeführt, der die Pellets (19) zu kugelförmigen Pellets (15) umformt. Die Pellets (15) werden über ein Förderband (21) zu einem Lkw (nicht dargestellt) für den Weitertransport transportiert.

### Bezugszahlen

- 1: Fallrohr
- 2: Mehl aus Abfallstoffen
- 3: Düsenring
- 4: Düsenring
- 5: Düsenring
- 6: Zweiwellenmischer
- 7: erste Welle mit Schnecke
- 8: zweite Welle mit quaderförmigen Wellenarmen (9, 10)
- 9: quaderförmige Wellenarme
- 10: quaderförmige Wellenarme
- 11: Tonmehl
- 12: Trommelmischer
- 13: Trommel
- 14: Mitnehmer
- 15: Pellets
- 16: Pflugscharmischer
- 17: Pelletierpresse
- 18: Stränge
- 19: Pellets
- 20: Förderband
- 21: Förderband

## Patentansprüche

1. Verfahren zur Behandlung von Mehl aus besonders überwachungsbedürftigen Abfallstoffen oder von zerkleinerten besonders überwachungsbedürftigen Abfallstoffen mit folgenden Verfahrensschritten:
- dem Mehl (2) oder den zerkleinerten Abfallstoffen werden folgende Materialien
- Flüssigkeit und
- ein oder mehrere Quellmittel und
- ein oder mehrere Bindemittel zugesetzt,
- das Mehl (2) oder die zerkleinerten Abfallstoffe werden mit den Materialien vermischt,
- aus den besonders überwachungsbedürftigen Abfallstoffen (2) wird durch Zugabe dieser Materialien ein nicht überwachungsbedürftiges, einer weiteren Verwertung zuführbares feuchtes Endprodukt hergestellt.

2. Verfahren nach Anspruch 1, **dadurch gekennzeichnet, dass** dem Mehl (2) oder den zerkleinerten Abfallstoffen Flüssigkeit und/oder wenigstens ein Klebstoff zugesetzt wird.

3. Verfahren nach Anspruch 1, **dadurch gekennzeichnet, dass** den Abfallstoffen (2) als Quellmittel Gelatine zugesetzt wird.

4. Verfahren nach Anspruch 3, **dadurch gekennzeichnet, dass** als Gelatine technische Gelatine oder Lebensmittelgelatine verwendet wird.

5. Verfahren nach Anspruch 1, **dadurch gekennzeichnet, dass** den Abfallstoffen (2) Melasse zugesetzt wird.

6. Verfahren nach Anspruch 2, **dadurch gekennzeichnet, dass** den Abfallstoffen (2) als Klebstoff Knochenleim und/oder Hautleim zugesetzt wird.

7. Verfahren nach Anspruch 1, **dadurch gekennzeichnet, dass** den Abfallstoffen (2) als Bindemittel Ton oder Tonmehl (11) zugesetzt wird.

8. Verfahren nach einem der vorhergehenden Ansprüche, **dadurch gekennzeichnet, dass** den Abfallstoffen in einem ersten Verfahrensschritt wenigstens ein Quellmittel und in einem zweiten Verfahrensschritt wenigstens ein Bindemittel zugesetzt wird.

9. Verfahren nach Anspruch 1, **dadurch gekennzeichnet, dass** in einem ersten Verfahrensschritt Gelatine den Abfallstoffen zugesetzt wird, dass eine Vermischung der Gelatine mit den Abfallstoffen erfolgt, dass während des Mischvorganges und/oder nach dem Mischvorgang dem Gemisch Ton und/oder Tonmehl zugegeben wird, und dass eine weitere Vermischung des Gemisches mit dem Ton und/oder Tonmehl erfolgt.

10. Verfahren nach Anspruch 9, **dadurch gekennzeichnet, dass** das Gemisch aus Abfallstoffen, Gelatine und Ton oder Tonmehl in einem Trommelmischer oder einer Presse zu Pellets weiterverarbeitet wird.

11. Verfahren nach Anspruch 1, **dadurch gekennzeichnet, dass** zu den Abfallstoffen, bezogen auf das Gewicht der Abfallstoffe, 1 bis 25 Gewichtsprozent Quellmittel und 5 bis 60 Gewichtsprozent Ton zugegeben wird.

12. Verfahren nach Anspruch 1, **dadurch gekennzeichnet, dass** zu den Abfallstoffen, bezogen auf das Gewicht der Abfallstoffe, 4 bis 20 Gewichtsprozent Quellmittel und 6 bis 50 Gewichtsprozent Bindemittel zugegeben wird.

13. Verfahren nach Anspruch 12, **dadurch gekennzeichnet, dass** zu den Abfallstoffen, bezogen auf das Gewicht der Abfallstoffe, 4 bis 20 Gewichtsprozent Gelatine und 6 bis 50 Gewichtsprozent Ton zugegeben wird.

14. Vorrichtung zur Durchführung des Verfahrens nach Anspruch 1, **dadurch gekennzeichnet, dass** die Vorrichtung ein Fallrohr (1) mit wenigstens einem Düsenring (3, 4, 5) für die Zuführung von Quellmittel aufweist, dass dem Fallrohr (1) ein erster Mischer (6, 16) nachgeordnet ist, und dass dem ersten Mischer (6, 16) ein weiterer Mischer (12) oder eine Presse (17) nachgeordnet ist.

15. Vorrichtung nach Anspruch 14, **dadurch gekennzeichnet, dass** der erste Mischer (6, 16) als Zweiwellenmischer oder Pflugscharmischer ausgebildet ist.

16. Vorrichtung nach Anspruch 14, **dadurch gekennzeichnet, dass** das Fallrohr (1) drei Düsenringe (3, 4, 5) aufweist.

17. Vorrichtung nach Anspruch 16, **dadurch gekennzeichnet, dass** ein Düsenring (4) für die Zufuhr von Gelatine und zwei Düsenringe (3, 5) für die Zufuhr von Wasser vorgesehen sind.

18. Vorrichtung nach Anspruch 14, **dadurch gekennzeichnet, dass** der erste Mischer (6) als Zweiwellenmischer ausgebildet ist.

19. Vorrichtung nach Anspruch 14, **dadurch gekennzeichnet, dass** der zweite Mischer (12) als Trommelmischer ausgebildet ist.

20. Vorrichtung nach Anspruch 14, **dadurch gekennzeichnet, dass** die Presse (17) als Pelletierpresse ausgebildet ist.

## Claims

1. A method for treating dust from waste products requiring special supervision or comminuted waste products requiring special supervision comprising the following method steps:
- the following materials are added to the dust (2) or the comminuted waste products
- liquid and
- one or more swelling agents and
- one or more binders,
- the dust (2) or the comminuted waste products are mixed with the materials,
- a moist end product is produced from the waste products (2) requiring special supervision by the addition of these materials, which end product does not require supervision and may be supplied for further utilisation.

2. A method according to Claim 1, **characterised in that** liquid and/or at least one adhesive is added to the dust (2) or the comminuted waste products.

3. A method according to Claim 1, **characterised in that** gelatine is added to the waste products (2) as swelling agent.

4. A method according to Claim 3, **characterised in that** technological gelatine or foodstuffs gelatine is used as gelatine.

5. A method according to Claim 1, **characterised in that** molasses is added to the waste products (2).

6. A method according to Claim 2, **characterised in that** bone glue and/or hide glue is added to the waste products (2) as adhesive.

7. A method according to Claim 1, **characterised in that** clay or finely ground clay (11) is added to the waste products (2) as binder.

8. A method according to one of the preceding claims, **characterised in that** at least one swelling agent is added to the waste products in a first method step and at least one binder in a second method step.

9. A method according to Claim 1, **characterised in that** gelatine is added to the waste products in a first method step, **in that** mixing of the gelatine with the waste products takes place, **in that** during the mixing process and/or after the mixing process clay and/or finely ground clay is added to the mixture, and **in that** further mixing of the mixture with the clay and/or finely ground clay takes place.

10. A method according to Claim 9, **characterised in that** the mixture of waste products, gelatine and clay or finely ground clay is further processed in a drum mixer or a press into pellets.

11. A method according to Claim 1, **characterised in that** 1 to 25 weight percent swelling agent and 5 to 60 weight percent clay, relative to the weight of the waste products, is added to the waste products.

12. A method according to Claim 1, **characterised in that** 4 to 20 weight percent swelling agent and 6 to 50 weight percent binder, relative to the weight of the waste products, is added to the waste products.

13. A method according to Claim 12, **characterised in that** 4 to 20 weight percent gelatine and 6 to 50 weight percent clay, relative to the weight of the waste products, is added to the waste products.

14. A device for implementing the method according to Claim 1, **characterised in that** the device comprises a downpipe (1) with at least one nozzle ring (3, 4, 5) for the supply of swelling agent, **in that** downstream of the downpipe (1) is disposed a first mixer (6, 16), and **in that** downstream of the first mixer (6, 16) is disposed a further mixer (12) or a press (17).

15. A device according to Claim 14, **characterised in that** the first mixer (6, 16) is a double shaft mixer or plough blade mixer.

16. A device according to Claim 14, **characterised in that** the downpipe (1) comprises three nozzle rings (3, 4, 5).

17. A device according to Claim 16, **characterised in that** one nozzle ring (4) is provided for supplying gelatine and two nozzle rings (3, 5) are provided for supplying water.

18. A device according to Claim 14, **characterised in that** the first mixer (6) is a double shaft mixer.

19. A device according to Claim 14, **characterised in that** the second mixer (12) is a drum mixer.

20. A device according to Claim 14, **characterised in that** the press (17) is a pelletising press.

## Revendications

1. Procédé de traitement de poudres de déchets sujets à une surveillance particulière, ou de déchets broyés sujets à une surveillance particulière, comprenant les étapes suivantes :
- ajout des substances suivantes à la poudre (2) ou aux déchets broyés,
- du liquide, et
- un ou plusieurs agents gonflants, et
- un ou plusieurs agents liants,
- mélange de la poudre (2) ou des déchets broyés avec les substances,
- par ajout de ces substances, obtention d'un produit final humide, non sujet à une surveillance particulière et pouvant être soumis à un traitement ultérieur, à partir des déchets sujets à une surveillance particulière (2).

2. Procédé selon la revendication 1, **caractérisé en ce que** du liquide et/ou au moins un agent adhésif sont ajoutés à la poudre (2) ou aux déchets broyés.

3. Procédé selon la revendication 1, **caractérisé en ce que** de la gélatine est ajoutée comme agent gonflant aux déchets (2).

4. Procédé selon la revendication 3, **caractérisé en ce que** la gélatine utilisée est de la gélatine technique ou de la gélatine alimentaire.

5. Procédé selon la revendication 1, **caractérisé en ce que** de la mélasse est ajoutée aux déchets (2).

6. Procédé selon la revendication 2, **caractérisé en ce que** l'agent adhésif ajouté aux déchets (2) est de la colle des os et/ou de la colle de peau.

7. Procédé selon la revendication 1, **caractérisé en ce que** l'agent liant ajouté aux déchets (2) est de l'argile ou de la poudre d'argile (11).

8. Procédé selon l'une des revendications précédentes, **caractérisé en ce qu'**au moins un agent gonflant est ajouté aux déchets lors d'une première étape de procédé, et au moins un agent liant lors d'une deuxième étape de procédé.

9. Procédé selon la revendication 1, **caractérisé en ce que** de la gélatine est ajoutée aux déchets lors d'une première étape de procédé, **en ce qu'**il est procédé à un malaxage de la gélatine avec les déchets, **en ce que** de l'argile et/ou de la poudre d'argile sont ajoutées au mélange pendant et/ou après le processus de malaxage, et **en ce qu'**il est procédé à un autre malaxage du mélange avec l'argile et/ou la poudre d'argile.

10. Procédé selon la revendication 9, **caractérisé en ce que** le mélange de déchets, de gélatine et d'argile
ou de poudre d'argile est transformé en pellets dans un mélangeur à tambour ou une presse.

11. Procédé selon la revendication 1, **caractérisé en ce que** 1 à 25 % en poids, par rapport au poids des déchets, d'agent gonflant, et 5 à 60 % en poids d'argile sont ajoutés aux déchets.

12. Procédé selon la reveridication 1, **caractérisé en ce que** 4 à 20 % en poids, par rapport au poids des déchets, d'agent gonflant, et 6 à 50 % en poids d'agent liant sont ajoutés aux déchets.

13. Procédé selon la revendication 12, **caractérisé en ce que** 4 à 20 % en poids, par rapport au poids des déchets, de gélatine, et 6 à 50 % en poids d'argile sont ajoutés aux déchets.

14. Dispositif pour l'exécution du procédé selon la revendication 1, **caractérisé en ce que** le dispositif comprend un tuyau de descente (1) ayant au moins une couronne de buses (3, 4, 5) pour l'alimentation en agent gonflant, **en ce qu'**un premier mélangeur (6, 16) est disposé en aval du tuyau de descente (1), et **en ce qu'**un autre mélangeur (12) ou une presse (17) sont disposés en aval du premier mélangeur (6, 16).

15. Dispositif selon la revendication 14, **caractérisé en ce que** le premier mélangeur (6, 16) est réalisé comme mélangeur à deux cylindres ou comme mélangeur à soc.

16. Dispositif selon la revendication 14, **caractérisé en ce que** le tuyau de descente (1) est pourvu de deux couronnes de buses (3, 4, 5).

17. Dispositif selon la revendication 16, **caractérisé en ce qu'**une couronne de buses (4) est prévue pour l'alimentation en gélatine et deux couronnes de buses (3, 5) pour l'alimentation en eau.

18. Dispositif selon la revendication 14, **caractérisé en ce que** le premier mélangeur (6) est réalisé comme mélangeur à deux cylindres.

19. Dispositif selon la revendication 14, **caractérisé en ce que** le deuxième mélangeur (12) est réalisé comme mélangeur à tambour.

20. Dispositif selon la revendication 14, **caractérisé en ce que** la presse (17) est réalisée comme presse à pelleter.
